# EUROPEAN PATENT APPLICATION

(11) **EP 2 464 089 A1**
(43) Date of publication of application: **13.06.2012**
(21) Application number: 10306369.9
(22) Date of filing: 07.12.2010
(51) Int. Cl.: H04M 11/06, H04M 3/30

(54) **Diagnostic engine for determining global line characteristics of a DSL telecommunication line and method using same**

(71) Applicant: Alcatel Lucent, 75007 Paris (FR)
(72) Inventor: Dupuis, Nicolas, 4000, Liege (BE); Drooghaag, Benoît, 1421, Ophain-Bois-Seigneur-Isaac (BE)
(74) Representative: Narmon, Gisèle Marie Thérèse

(57) **Abstract**

A diagnostic engine for remotely determining global line characteristics of a xDSL telecommunication line from an access node location. The diagnostic engine comprises first, second, and preferably third, measurement means adapted to measure respectively first, second and third line characteristics according to three distinct measurement techniques such as MELT, SELT and DELT. The diagnostic engine further comprises combining means able to combine the measured line characteristics in order to derive thereof global line characteristics or information relative to the physical state of the line as well as possible consequences on DSL service. By combining the three measurements in the combining means, the resulting global line characteristics of the line are improved with respect to performing separately interpretations of the three measurements.

## Description

The present invention relates to a diagnostic engine for remotely determining global line characteristics of a telecommunication line at a termination of said line.

With the uprising market development of IPTV solutions, Video-On-Demand offers or Triple-play services, e.g. over xDSL, both the system performances and the customer support becomes more and more exigent.

As the physical link, generally a xDSL telecommunication line, which transports information through wire lines up to the end user, is known to be the bottle neck for the Quality of Service, a network analyzer software product is used to both remotely diagnose sources of physical problems and take actions to improve the performances. The diagnostic engine forms preferably part of the network analyzer software application and is generally embedded therein.

Such diagnostic engine helps the operators to troubleshoot problems occurring on the physical layer. For that purpose, different measurement techniques or analysis methods are developed to measure line parameters or line characteristics in order to derive thereof information relative to the global line characteristics of the telecommunication line.

For instance, one-ended line measurement technique or physical layer analysis technique already exists. For decades, metallic test heads have provided a way to estimate the line electrical parameters (for example: differential voltage/current, common mode voltage/current, lineic line parameters, line termination impedance...) within the telephonic frequency bandwidth. This method, which therefore provides a one-ended line testing solution within a narrow bandwidth, is known as Metallic Line Testing MELT or Narrow Band Line Testing NBLT solution.

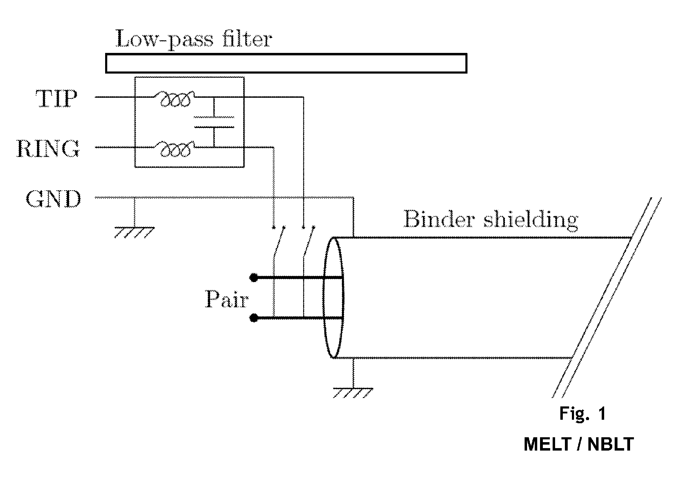

In practice, as represented at **Fig.1**, there is a direct metallic connection that can be established between each of the two wires, TIP and RING, as well as the binder shielding GND connected to earth potential, and the metallic test system. Metallic tests offer a three-wire measurement solution.

The advantage of such test setup is to be able to collect AC and DC voltage/current between each of the three-wire pairs, i.e. V_{tip-ring}, I_{tip-ring}, V_{tip-gnd}, I_{tip-gnd}, V_{ring-gnd} and I_{ring-gnd}. This allows an estimation of the narrow-band line model parameters such as the resistance and capacitance as well as its termination impedance and insulation resistance.

With the knowledge of these measured line characteristics, it becomes possible to estimate the following physical properties or global line characteristics of the telecommunication line:
- Loop length (knowing the lineic capacitance);
- Loop termination (phone, open line, short-circuit, operator's specific termination equipment);
- Detection of specific faults (one-wire open fault, short-circuit, ...);
- Presence of undesirable line properties (low common mode insulation, unbalanced loop, ...)

However, as this Metallic Line Testing MELT stands for low-frequency signals (large wavelengths compared to loop lengths), only low-frequencies circuit line characteristics can be obtained. However, inference about electrical properties, for example an opened wire, which also has impacts on the DSL frequency bands and therefore the DSL service, can be made.

To investigate what happens in the DSL frequency bands, another measurement technique or physical layer analysis technique, based on reflectometry, can be used. This is the Single-Ended Line Test SELT (respectively the SELT-PMD for the measurement technique and the SELT-P for the on-top interpretation/analysis, as described in ITU-G.996.2, but in the present document we talk about SELT measurement to generalize the information given by the test technique using both the measurements and the interpretation) which analyzes the wave reflections within the entire DSL-frequencies spectrum.

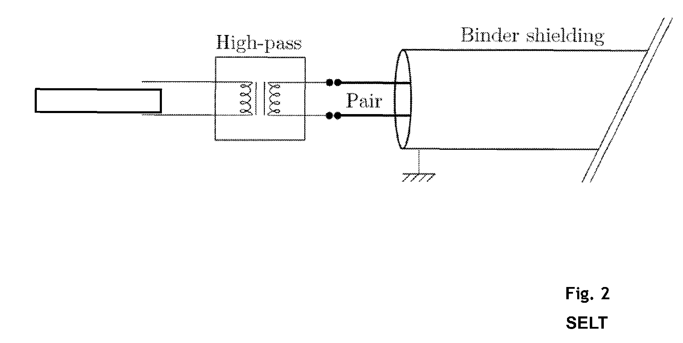

As represented at **Fig. 2**, the Single-Ended Line Test SELT is a reflectometry measurement performed between the two wires of a given pair. The analysis signals pass through a coil transformer with galvanic isolation, no common-mode parameters can be collected, restricting the measure only to the differential mode. Moreover, the transformer acts as a high-pass filter which prevents to measure any DC components. The advantages of the SELT technique are however the ability to estimate more reliably the loop length or to detect and localize some faults.

Compared to MELT technique, SELT provides a reliable estimation of the fault location even in the presence of short circuits. Also, complex loop topologies or phenomena, showing properties within the DSL frequencies, as the presence of bridge taps, can be identified using this type of measurement technique.

By contrast, the reliability of line characteristics measured with SELT decreases with loop-length, especially for loops longer than 3 km, while MELT still provides consistent estimations. Also, SELT method has more difficulties to detect the termination type or cannot even detect them when it requires common-mode voltages/currents, such as for fault to ground.

There exists also a Dual-ended-line-test DELT measurement technique to diagnose problems using the operational parameters of the line and to directly quantify their impact on the DSL service. The DELT measurements are performed by the xDSL modems themselves when the line is in service or just before the line enters in service, during the initialization phase. DELT requires therefore the connection of modems to the line as well as the presence of DSL service. When the line is broken, or when no Customer Premise Equipment CPE is present, measurements of line characteristics are unavailable.

In summary, each of these three measurement techniques provides a solution to estimate some electrical parameters or line characteristics. The capabilities of the three techniques have their own advantages that are however complementary.

Each type of measurement technique is performed on its own and experts are involved to manually start the required analysis, to collect the different measured line characteristics and to combine them in order to obtain global line characteristics of the telecommunication line.

An object of the present invention is to provide an improved diagnostic engine adapted to gain in service quality by increasing the broadness of the capabilities as well as the reliability of the estimations leading to facilitate advanced troubleshooting.

According to a characterizing embodiment of the present diagnostic engine, this object is achieved due to the fact that said diagnostic engine comprises:
first measurement means adapted to measure first predetermined line characteristics according to a first measurement technique,
second measurement means adapted to measure second predetermined line characteristics according to a second measurement technique, and
combining means adapted to combine the measured first and second predetermined line characteristics in order to derive thereof global line characteristics of a telecommunication line.

In this way, owing to the presence of two distinct measurement means and of the combining means in the diagnostic engine, not only the service quality is improved, but money and time is saved by no longer involving interventions of experts for advanced troubleshooting.

On the opposite of the above independent measurement techniques generally requiring a manual inspection by an expert, the present diagnostic engine can be use by less skilled technicians. As the impairments are localized, field forces can be driven directly at the right location. This globally results in accelerating the maintenance process of the xDSL line and reducing the costs.

Another characterizing embodiment of the present diagnostic engine is that said measurement techniques are chosen amongst Metallic Line Testing MELT, Single-ended-line-test SELT, and Dual-ended-line-test DELT.

Using two of these advanced measurement techniques on the problem impacting a DSL line, allows combining a root cause analysis, a fault localization and service impact.

In another characterizing embodiment, of the present diagnostic engine further comprises third measurement means adapted to measure third predetermined line characteristics according to a third measurement technique, and said combining means are adapted to combine the measured first, second and third predetermined line characteristics in order to derive thereof global line characteristics of said line.

In this way, three distinct measurement techniques can automatically be applied on a same problematic telecommunication line. The predetermined line characteristics or results of the measurements are then simultaneously combined by the combining means to provide global line characteristics which give accurate diagnosis on the physical state of the line and possible consequences on DSL service.

The present invention also relates to a method for remotely determining global line characteristics of a telecommunication line at a termination of said line.

This method is preferably used by the above described diagnostic engine and comprises the steps of:
- measuring first predetermined line characteristics according to a first measurement technique,
- measuring second predetermined line characteristics according to a second measurement technique, and
- combining the measured first and second predetermined line characteristics in order to derive thereof global line characteristics of said line.

In this way, by measuring two distinct line characteristics and by combining them, very accurate and reliable global line characteristics can be provided on the localization of a problem, on its possible root causes and on its impact on the DSL service.

In a preferred characterizing embodiment, the present method further comprises the steps of:
- measuring third predetermined line characteristics according to a third measurement technique, and
- combining the measured first, second and third predetermined line characteristics in order to derive thereof global line characteristics of said line.

Whereby three different measurement techniques are applied with the advantages mentioned above with respect to the diagnostic engine performing same.

Further characterizing embodiments of the present diagnostic engine and method used therein are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

The above and other objects and features of the invention will become more apparent and the invention itself will be best understood by referring to the following description of an embodiment taken in conjunction with the accompanying drawings wherein:
**Fig. 1** represents a diagnostic engine operating according to a first measurement technique (MELT/NBLT);
**Fig. 2** represents a diagnostic engine operating according to another measurement technique (SELT);
**Fig. 3** represents a diagnostic engine according to one embodiment of the invention and operating to two distinct measurement techniques (SELT, MELT);
**Fig. 4** shows a telecommunication line with a short circuit in the middle of the loop to be detected by the diagnostic engine;
**Fig. 5** shows a telecommunication line with an operator premise signatures to be detected by the diagnostic engine;
**Fig. 6** shows a telecommunication line with a short circuit to the ground in the middle of the loop to be detected by the diagnostic engine; and
**Fig. 7** shows a telecommunication line with a one-wire-open fault to be detected and localized by the diagnostic engine.

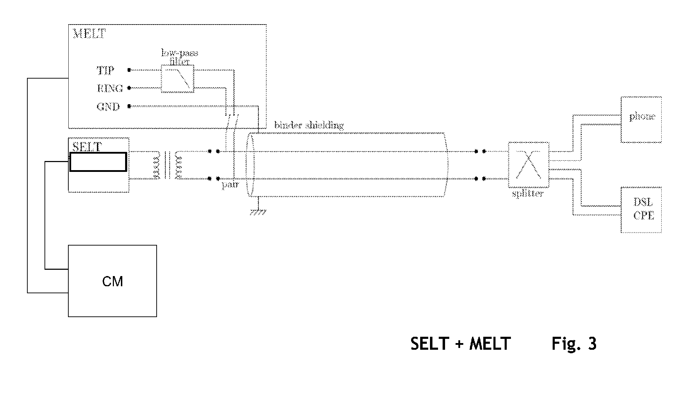

The diagnostic engine shown at **Fig. 3** is used for building global line characteristics or physical state/properties of the line as a result of an automatic combination of the results of different measurements techniques such a DELT, SELT and MELT. As a result, the diagnostic engine can provide accurate information on the problem physical root cause, its localization and its impact on the DSL service.

In a first embodiment, the diagnostic engine launches two types of analyzes, performing by devices located generally at a telecommunication access node location, e.g. a DSLAM, and combines their results in order to take benefits from their complementary advantages to broaden the analysis capabilities as well as to improve the reliability of the conclusions.

In more detail, the diagnostic engine remotely determines global line characteristics of a telecommunication line, preferably a DSL telecommunication line, at an access node DSLAM. The other end of the xDSL line is coupled to a phone and/or to a DSL Customer Premises Equipment CPE. If both are present, a splitter is used to separate the signals.

To this end, the diagnostic engine comprises:
- first measurement means able to apply a first measurement technique, e.g. Metallic Line Testing MELT or Narrow Band Line Testing NBLT, to the line;
- second measurement means able to apply a second measurement technique, e.g. Single-Ended Line Test or reflectometry SELT, to the line; and
- combining means CM coupled to the first and the second measurement means and able to combine the results of the two types of measurements to provide an enhanced combined test solution able to extend the capabilities of one-ended line testing.

The first and second measurement means are preferably adapted to operate simultaneously or successively.

It is to be noted that the first or the second measurement means may also be designed to apply another measurement technique as the physical layer analysis technique to the line, such as for instance the Dual-Ended Line Test DELT adapted to measure operational properties of the wire line.

Furthermore, any combination of two of the above measurement techniques SELT, MELT or DELT may be applied.

The line testing solution offered by the present diagnostic engine offers broader and more confident possibilities resulting from the "intelligent" combination of complementary measurements, like:
- Loop termination, even for long loops;
- Fault type and location, even for long loops;
- Improvement of loop length estimation, even for long loops;
- Gain in reliability for properties commonly identified by two or more techniques;
- Improvement of MELT conclusions in the presence of bridge-taps or complex topologies.

It is to be noted that the diagnosis engine, generally embedded in a network analyzer software product, is remotely located on a server. The first task of the diagnosis engine, and more particularly of the combining means CM thereof, is to contact the DSLAMs and to collect the measured data or predetermined line characteristics before using them to provide the combined diagnosis or global and improved line characteristics of a telecommunication line.

The Single-Ended Line Test SELT, represented at Fig. 2, is used to localize a problem when the line is out-of-service, with very limited information on the type of problem (only open or short circuit) and without being able to quantify accurately the impact on the service.

SELT measurements are performed through a high-pass filter, i.e. a transformer, coupled to a pair of wires at the termination of the xDSL telecommunication line, the binder shielding of the xDSL line being further connected to earth potential.

SELT is in fact a reflectometry measurement performed by the modem located at the access node. Like any other reflectometry system, it consists in sending an incident signal on the line and observing the signal reflection (echo).

As this measurement requires an interruption of service to be launched, it is usually performed on broken line on which the service is already interrupted. The resulting measured line characteristics can be presented graphically by a reflectogram, e.g. plot showing the amplitude of the reflected signal (echo) in function of the distance. As, according to the transmission line theory, any impedance change will create a signal reflection, any kind of impairment on the line (open circuit, short circuit, bridge-tap, gauge change, ...) will create a local maximum on the reflectogram at the impairment distance.

This SELT technique is very powerful in localizing some problems, but weak to infer on the impairment nature and potential impact on DSL service.

The Metallic Line Testing MELT technique, represented at Fig. 1, is in fact the legacy test system used on telephone lines from decades, but it is now also embedded on DSL equipments.

MELT measurements, also known as Narrow Band Line Testing NBLT measurements, are performed through a low-pass filter having TIP and RING terminals coupled to a pair of wires at the termination of the xDSL line via distinct coils and switches. In addition to the two coils, the low-pass filter comprises a capacitor coupled across the ends of these coils. The binder shielding of the xDSL telecommunication line is further connected to earth potential via a GND terminal.

MELT measurements are performed in the telephone bandwidth (DC to a few kHz) and consists in measuring some physical line parameters or characteristics, like DC voltage or resistance and capacitance between the wires.

To the opposite of SELT and DELT (described below), MELT can also be performed in common-mode, i.e. measuring characteristics between a single wire of the line and the ground. Thanks to this unique advantage, it can be used to diagnose very accurately some kind of problems. For example, it can make the distinction between the 2 wires and precisely identify which one is broken. However, MELT has limited localization capability (e.g. localization of open circuit via capacitance measurement, but no short-circuit localization) and nearly no way to determine what the impact will be on a potential DSL service running on the line, due to its very limited bandwidth.

MELT results are displayed with relatively limited localization information (only open circuits are localized) and no information on DSL service impact.

Four typical cases of faults are described below as examples to illustrate the benefits of the diagnostic engine.

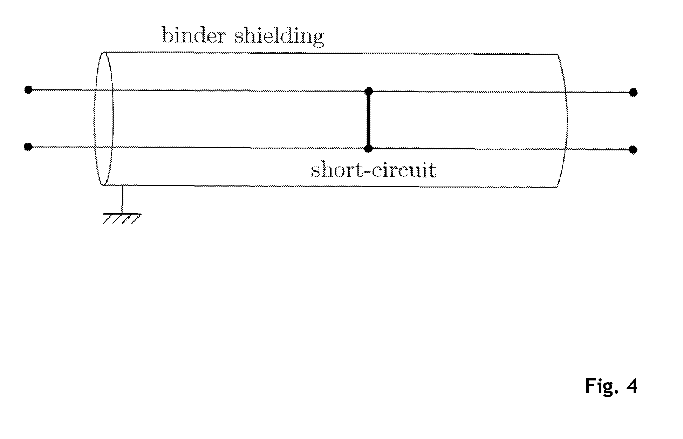

In a first example, shown at **Fig 4****,** a short circuit is present in the middle of the loop. Electrically, the differential impedance is dominated by the very low impedance created by the short circuit that reports differential impedance which is very low (limited to the wire impedance). Also, it becomes impossible to measure only the common-mode capacitance of each wire separately. Therefore, when using the MELT solution only, the estimation of the different capacitances remains wrong and no reliable fault location can be computed. By contrast, when using reflectometry SELT and according to electro-magnetic theory, there is propagation of electro-magnetic waves in the line medium until the fault location where reflections occur. The reflected waves experienced a 180° phase-shift and travel back to the reflectometry generator module. It becomes therefore possible to estimate the nature of the fault, i.e. the short circuit, and to localize it.

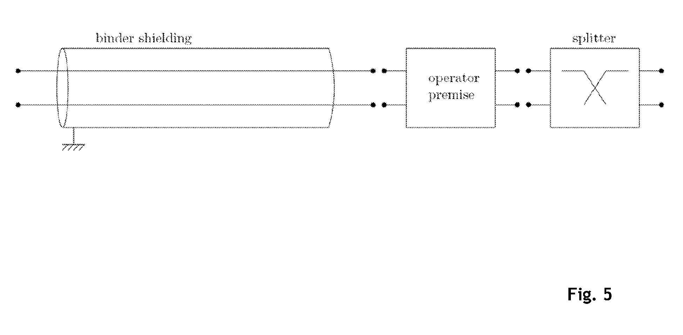

The second example deals with the detection of operator premise signatures. To simplify, and from an electrical point of view, this type of equipment adds only an extra impedance to the differential component at the operator premise before the splitter. This is illustrated in **Fig. 5**. Using metallic testing solution MELT, if each common-mode impedance gives fairly the same expected results compared to the differential impedance, it becomes quite evident to infer about the presence of extra impedance at the loop termination side, giving clues about the presence of a device connected to the line. An accurate measure of this impedance can even identify an operator equipment signature. When performing a reflectometry analysis SELT, as only differential measurements are available and as no comparison with respect to the common mode are possible, the presence of this extra impedance can be interpreted, from the SELT module, as a longer loop estimation. Even worst, if this equipment contains non-linear components, as diodes, it requires DC differential current to detect them, which cannot pass though the coil transformer and therefore cannot be measured by the SELT module.

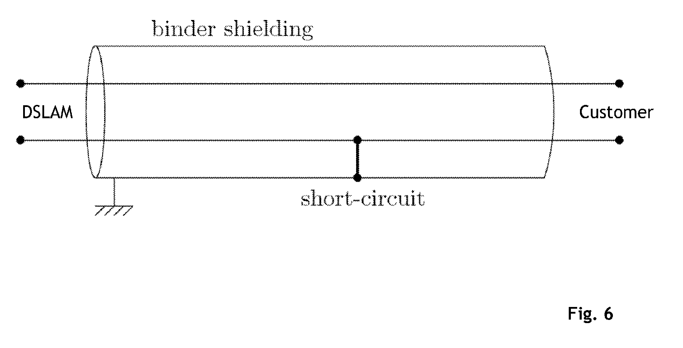

The third example presents a fault that requires the two combined approaches MELT and SELT to detect and localize it. Practically, in the short-circuit-to-the-ground fault case, as presented in **Fig. 6****,** one wire of the pair is short-circuited to the binder shielding, somewhere between the access node or DSLAM and the customer end of the line. In this case, the MELT solution detects the presence of such fault but cannot localize it. By contrast, SELT cannot conclude about the presence of this fault type but is able to localize a problem at a given length.

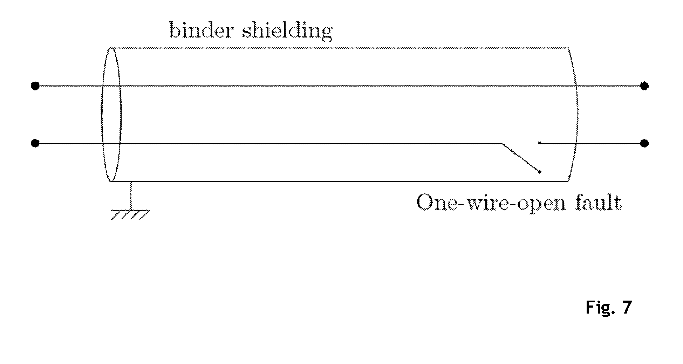

Finally, in the fourth example of one-wire-open fault, shown at **Fig. 7****,** each test approaches is relevant to detect and localize this type of problem. However, the use of the two solutions allows to identify the fault type and to localize it with a higher degree of confidence, especially when it occurs at long distance. The combine use of the two results therefore brings out more trusty conclusions.

Different fault types and the methods used to detect them are summarized at **Table 1** below. Therein is indicated which method best suits for detecting faults according to the fault type. It also appears that a combined measurement generally improves the information relative to the global line characteristics with respect of using the measurements methods separately.

**Table 1: Fault types vs. separated and combined measurement techniques SELT and MELT**

| **Fault type** | **SELT** | **MELT (NBLT)** | **SELT + MELT (NBLT)** |
|---|---|---|---|
| Open loop length | √ | √ | 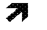 (improvement) |
| Termination (open/short) | √ (but difficult for long loops) | √ (easy) | √ |
| Fault to ground detection | × | √ | √ |
| Fault to ground localization | √ | × | √ |
| One-wire-open detection | × | √ | √ |
| One-wire-open localization | √ | √ | 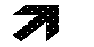 (improvement) |
| Customer-premises signatures | × | √ | √ |
| Bridged taps | √ | × | √ |

In a preferred embodiment (not shown), the diagnostic engine further comprises third measurement means able to apply a third measurement technique, e.g. Dual-Ended Line Test DELT, to the xDSL telecommunication line.

The combining means CM are then adapted to combine the measured first, second and third line characteristics obtained by the three types of measurements in order to derive thereof information relative to the state of a telecommunication line.

The Dual-Ended Line Test DELT measurements are performed by the xDSL modems themselves when the line is in service or just before the line enters in service, during the initialization phase. The resulting measured line characteristics are stored in the modem equipments and can be polled by a software having access to the operator management network. As the measurements are done by the modems themselves, DELT is only available when modems are connected to the line at both sides and have been in service during a while. When the line is broken, or when no Customer Premise Equipment CPE is present, those measurements get unavailable or meaningless.

DELT is used to detect problems on the physical layer and quantify their impact on the service.

The measurements are taken in the xDSL band (typical from 20kHz to a few MHz depending on the xDSL technology type), which makes them very useful to quantify the impact on the problem to the xDSL service that should work within the same frequency band.

An example of improved or global line characteristics of the DSL telecommunication line obtained by the combined three measurement techniques is described below by making again reference to **Fig. 6** where one of the two wires of the twisted pair is shorted to the ground by accident, somewhere in the middle of the line, between the access node or DSLAM and the Customer.

In this example, the measurements obtained by each technique will report the following results:
- MELT will detect a short-circuit between one of the 2 wires (even identify which wire is impacted) and the ground, with no localization information or service impact.
- SELT will detect an unknown default but it will determine accurately to distance between the impairment and the central office. The service impact is imprecisely estimated; and
- in addition, DELT will detect an unbalanced loop, by detecting an increase of the crosstalk level. This excess of crosstalk will be quantified in term of bitrate impact (loss of x kbps). However, the problem root cause and localization are unknown by DELT on its own;

The combination of the measurements obtained by the three measurement techniques allows identifying and localizing the default and quantifying its service impact.

When such a problem occurs, a typical tool being only able to perform separate or single DELT, SELT or MELT measurements, i.e. without a combined measurement engine or combination means CM, will provide line characteristics like:
- Unbalanced loop resulting in a bitrate loss of 4Mbps (coming from DELT);
- Unknown fault at 1 km from the central office (coming from SELT); or
- Insulation fault between wire A and Ground (coming from MELT).

The diagnostic engine is now able to further combine all these measurements by a single measurement engine CM. As a result, the displayed output message of information or global line characteristics relative to the status of the telecommunication line would be like:
- Short-circuit between wire A and the Ground located at 1km from the central office, resulting in a bitrate loss of 4Mbps.

The same clear information relative to the global line characteristics can be obtained from any other combined measurements. The combined measurements can for instance be applied to other defaults such as one-wire-open faults as shown at **Fig. 7** where one of the 2 wires is open, wire cross as shown at **Fig. 4** with a short-circuit between wires of different pairs, degraded contact, ...

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A diagnostic engine for remotely determining global line characteristics of a telecommunication line at a termination of said line,
**characterized in that** said diagnostic engine comprises:
first measurement means adapted to measure first predetermined line characteristics according to a first measurement technique (MELT/SELT/DELT),
second measurement means adapted to measure second predetermined line characteristics according to a second measurement technique (SELT/MELT/DELT), and
combining means adapted to combine the measured first and second predetermined line characteristics in order to derive thereof global line characteristics of a telecommunication line.

2. The diagnostic engine according to claim **1**,
**characterized in tha**t said first measurement technique is Metallic Line Testing (MELT),
**and in that** said second measurement technique is Single-ended-line-test (SELT).

3. The diagnostic engine according to claim **1**,
**characterized in that** said first measurement technique is Metallic Line Testing (MELT),
**and in that** said second measurement technique is Dual-ended-line-test (DELT).

4. The diagnostic engine according to claim **1,**
**characterized in that** said first measurement technique is Single-ended-line-test (SELT),
**and in that said** second measurement technique is Dual-ended-line-test (DELT).

5. The diagnostic engine according to claim **1,**
**characterized in that** said diagnostic engine further comprises third measurement means adapted to measure third predetermined line characteristics according to a third measurement technique (DELT/MELT/SELT),
**and in that** said combining means are adapted to combine the measured first, second and third predetermined line characteristics in order to derive thereof global line characteristics of said line.

6. The diagnostic engine according to claim **1, characterized in that** said termination of the telecommunication line is located at a telecommunication access node location.

7. The diagnostic engine according to claim **1, characterized in that** said telecommunication line is a DSL telecommunication line.

8. A method for remotely determining global line characteristics of a telecommunication line at a termination of said line,
**characterized in that** said method comprises the steps of:
- measuring first predetermined line characteristics according to a first measurement technique (MELT/SELT/DELT),
- measuring second predetermined line characteristics according to a second measurement technique (SELT/MELT/DELT), and
- combining the measured first and second predetermined line characteristics in order to derive thereof global line characteristics of said line.

9. The method according to claim 8,
**characterized in that** said first measurement technique is Metallic Line Testing (MELT),
**and in that** said second measurement technique is Single-ended-line-test (SELT).

10. The method according to claim 8,
**characterized in that** said first measurement technique is Metallic Line Testing (MELT),
**and in that** said second measurement technique is Dual-ended-line-test (DELT).

11. The method according to claim **8**,
**characterized in that** said first measurement technique is Single-ended-line-test (SELT),
**and in that** said second measurement technique is Dual-ended-line-test (DELT).

12. The method according to claim **8**, **characterized in that** said method further comprises the steps of:
- measuring third predetermined line characteristics according to a third measurement technique (DELT/MELT/SELT), and
- combining the measured first, second and third predetermined line characteristics in order to derive thereof global line characteristics of said line.

13. The method according to claim **8, characterized in that** said termination of the telecommunication line is located at a telecommunication access node location.

14. The method according to claim **8, characterized in that** said telecommunication line is a DSL telecommunication line.

## Amended claims

### Amended claims in accordance with Rule 137(2) EPC.

**1.** A diagnostic engine for remotely determining global line characteristics of a telecommunication line at a termination of said line,
**characterized in that** said diagnostic engine comprises:
a first measurement module (MELT) adapted to be coupled to said termination of the telecommunication line and to measure first predetermined line characteristics according to a Metallic Line Testing measurement technique,
a second measurement module (SELT / DELT) also adapted to be coupled to said termination of the telecommunication line and to measure second predetermined line characteristics according to another measurement technique, and
a combining module (CM) coupled to said first and to said second measurement module and adapted to combine the measured first and second predetermined line characteristics and to derive thereof global line characteristics of said telecommunication line.

**2.** The diagnostic engine according to claim 1,**characterized in that**
the other measurement technique is Single-ended-line-test (SELT).

**3.** The diagnostic engine according to claim 1,
**characterized in that** the other measurement technique is Dual-ended-line-test (DELT).

**4.** The diagnostic engine according to claim 1,
**characterized in that** said diagnostic engine further comprises a third measurement module (DELT / SELT) also adapted to be coupled to said termination of the telecommunication line and to measure third predetermined line characteristics according to a third measurement technique,
and **in that** said combining module (CM) is coupled to said first, second and third measurement module and is adapted to combine the measured first, second and third predetermined line characteristics and to derive thereof global line characteristics of said telecommunication line.

**5.** The diagnostic engine according to claim 4,
**characterized in that** the other measurement technique is Single-ended-line-test (SELT),
and **in that** said third measurement technique is Dual-ended-line-test (DELT).

**6.** The diagnostic engine according to claim 1, **characterized in that** said termination of the telecommunication line is located at a telecommunication access node location.

**7.** The diagnostic engine according to claim 1, **characterized in that** said telecommunication line is a DSL telecommunication line.

**8.** A method for remotely determining global line characteristics of a telecommunication line at a termination of said line,
**characterized in that** said method comprises the steps of:
- measuring first predetermined line characteristics at said termination of the telecommunication line according to a Metallic Line Testing measurement technique (MELT),
- measuring second predetermined line characteristics at said termination of the telecommunication line according to another measurement technique (SELT / DELT), and
- combining the measured first and second predetermined line characteristics and deriving thereof global line characteristics of said telecommunication line.

**9.** The method according to claim 8,**characterized in that** the other measurement technique is Single-ended-line-test (SELT).

**10.** The method according to claim 8,**characterized in that** the other measurement technique is Dual-ended-line-test (DELT).

**11.** The method according to claim 8, **characterized in that** said method further comprises the steps of:
- measuring third predetermined line characteristics at said termination of the telecommunication line according to a third measurement technique (DELT /SELT), and
- combining the measured first, second and third predetermined line characteristics and deriving thereof global line characteristics of said telecommunication line.

**12.** The method according to claim 11,
**characterized in that** the other measurement technique is Single-ended-line-test (SELT),
and **in that** said third measurement technique is Dual-ended-line-test (DELT).

**13.** The method according to claim 8, **characterized in that** said termination of the telecommunication line is located at a telecommunication access node location.

**14.** The method according to claim 8, **characterized in that** said telecommunication line is a DSL telecommunication line.
